# EUROPÄISCHE PATENTSCHRIFT

(11) **EP 0 715 584 B1**
(45) Veröffentlichungstag und Bekanntmachung des Hinweises auf die Patenterteilung: **23.04.1997**
(21) Anmeldenummer: 94924852.0
(22) Anmeldetag: 06.08.1994
(51) Int. Cl.: B64F 5/00, B60P 1/54

(54) **ANORDNUNG ZUR OBERFLÄCHENBEARBEITUNG, INSBESONDERE ZUR OBERFLÄCHENREINIGUNG VON GROSSOBJEKTEN**
ARRANGEMENT FOR SURFACE TREATMENT, ESPECIALLY THE CLEANING OF THE SURFACES OF LARGE OBJECTS
SYSTEME DE TRAITEMENT DE SURFACE, NOTAMMENT DE NETTOYAGE DE SURFACE POUR OBJETS DE TAILLE IMPORTANTE

(30) Priorität: 31.08.1993 DE 4329254
(43) Veröffentlichungstag der Anmeldung: 12.06.1996
(73) Patentinhaber: PUTZMEISTER-WERK MASCHINENFABRIK GMBH, 72631 Aichtal (DE)
(72) Erfinder: WANNER, Martin, D-70599 Stuttgart (DE); SCHLECHT, Karl, D-70794 Filderstadt (DE); FÜGEL, Dietmar, D-72649 Wolfschlugen (DE); FRITZ, Stefan, D-70372 Stuttgart (DE)
(74) Vertreter: Wolf, Eckhard, Dr.-Ing.
(86) Internationale Anmeldenummer: EP9402611
(87) Internationale Veröffentlichungsnummer: WO9506587

(56) Entgegenhaltungen:
- EP-A- 0 066 567
- EP-A- 0 404 684
- DE-A- 4 035 519
- FR-A- 1 149 351
- GB-A- 1 327 901
- US-A- 4 002 242

## Beschreibung

Die Erfindung betrifft eine Anordnung zur Oberflächenbearbeitung, insbesondere zur Oberflächenreinigung von Großobjekten, wie Flugzeugen, Schiffen oder Bauwerken, mit einem Großmanipulator, der einen aus mehreren, an Drehgelenken mittels hydraulischer oder motorischer Antriebsaggregate gegeneinander verschwenkbaren Auslegern bestehenden, auf einem Drehlagerbock eines vorzugsweise als motorgetriebenes Fahrgestell ausgebildeten Geräteträgers mit seinem Grundausleger um eine Hochachse drehbar gelagerten Knickmast und ein am Endausleger des Knickmasts oder am freien Ende eines am Endausleger angeordneten Multigelenks angeordnetes, vorzugsweise als rotierender Bürstenkopf ausgebildetes Werkzeug aufweist, wobei der Grundausleger im zusammengefalteten Zustand des Knickmasts unter den anderen Auslegern auf dem Geräteträger abgestützt ist, und der Endausleger mit in Richtung Drehlagerbock weisendem Multigelenk und Werkzeug über oder neben den anderen Auslegern angeordnet ist.

In der DE-A-40 35 519 ist bereits vorgeschlagen worden, einen Großmanipulator mit einem fernsteuerbaren Bürstenkopf auszustatten. Der bekannte Großmanipulator weist einen aus mehreren, an ihren Enden gegeneinander verschwenkbaren Auslegern zusammengesetzten Knickmast auf, dessen Grundausleger an einem auf einem motorgetriebenen Fahrgestell angeordneten Drehlagerbock um eine vertikale Achse drehbar gelagert ist und dessen Endausleger ein mit dem Bürstenkopf bestückbares Multigelenk aufweist. Aus dieser Druckschrift ist es auch bekannt, den Bürstenkopf mit Sensoren auszustatten, die eine regelbare Nachführung des Bürstenkopfes gegenüber der zu bearbeitenden Oberfläche nach Maßgabe eines beim Reinigungsvorgang am Sensor auftretenden, abgreifbaren Sensorsignals ermöglichen. Bei der bekannten Anordnung weist der Knickmast insgesamt fünf in Multi-Z-Faltung gegeneinander faltbare Ausleger auf, die mit oben aufliegendem Grundausleger und unten befindlichem Endausleger mit Multigelenk und Bürstenkopf auf dem Fahrgestell zu Transportzwecken auflegbar sind. Um im Überkopfbetrieb arbeiten zu können, muß der Knickmast zunächst im Grundgelenk des Drehlagerbocks vom Fahrgestell abgehoben und um die Drehachse des Drehlagerbocks um 180° in die Arbeitsposition gedreht werden. Vor allem beim fahrgestellnahen Arbeiten und beim Arbeiten in Hallen wirkt sich hierbei außerdem der begrenzte Schwenkbereich des Grundgelenks von nur 100° bis 110° nachteilig aus.

Weiter ist es bei einer Anordnung zur Oberflächenreinigung von Flugzeugen mit einem zweiarmigen Knickmast und einem rotierenden Bürstenkopf der eingangs angegebenen Art bekannt (EP-A 404 684), einen Abstandssensor vorzusehen, der dort im Bürstenkopf integriert ist und die Aufgabe hat, die Bürstenposition relativ zur Flugzeugoberfläche zu überwachen.

Der Erfindung liegt die Aufgabe zugrunde, eine Anordnung der eingangs angegebenen Art zu entwickeln, womit auch bei ungenauer Positionierung und Orientierung des den Großmanipulator tragenden Geräteträgers vor dem zu bearbeitenden Großobjekt eine kollisionsfreie vollautomatische Bearbeitung auch kompliziert gestalteter Oberflächen möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß mit einer am Großmanipulator angeordneten, gegen das zu bearbeitende Großobjekt ausrichtbaren optoelektronischen Entfernungsbildkamera und einer mit den Entfernungsbildsignalen der Entfernungsbildkamera beaufschlagten rechnergestützten Auswerteelektronik eine Anfahrhilfe für den als Fahrgestell ausgebildeten Geräteträger und/oder eine Einmessung des Großmanipulators relativ zu dem zu bearbeitenden Großobjekt und/oder eine Überwachung des Bearbeitungsvorgangs möglich ist, wobei die Entfernungsbildkamera an einer auf der dem Knickmast im zusammengefalteten und auf dem Geräteträger abgestützten Zustand gegenüberliegenden Seite des Drehlagerbocks angeordneten, um dessen Hochachse zusammen mit dem Knickmast drehbaren Konsole angeordnet ist. Mit der Entfernungsbildkamera können dabei nicht nur im zusammengefalteten Zustand des Knickmasts, sondern auch in dessen Arbeitsposition Messungen und Überwachungsaufgaben ausgeführt werden, da der Grundausleger um eine horizontale Achse mit einem Schwenkwinkel von etwa 180° schwenkbar am Drehlagerbock gelagert und im zusammengefalteten Zustand des Knickmasts unter den anderen Auslegern auf dem Fahrgestell abgestützt ist, während der Endausleger im zusammengefalteten Zustand mit in Richtung Drehlagerbock weisendem Multigelenk und Werkzeug über den anderen Auslegern angeordnet ist. Mit diesen Maßnahmen wird erreicht, daß der Knickmast beim Ausfalten von der zusammengefalteten Ruhestellung in die Arbeitsposition nicht um die Hochachse des Drehlagerbocks gedreht werden muß, so daß die mit dem Drehlagerbock verbundene Entfernungsbildkamera sowohl beim Anfahr- und Einmeßvorgang als auch beim anschließenden Bearbeitungsvorgang in Richtung Großobjekt ausgerichtet ist. Etwaige Korrekturen oder Nachführungen können über die Bewegungsachsen der Entfernungsbildkamera und/oder der Konsole ausgeführt werden.

Um im zusammengefalteten Zustand des Manipulators eine minimale Bauhöhe zu erreichen, wird gemäß einer vorteilhaften Ausgestaltung der Erfindung vorgeschlagen, daß der Grundausleger eine in seinem auf das Fahrgestell abgelegten Zustand nach oben weisende konkave Krümmung zur Aufnahme des am Grundausleger angelenkten zweiten Auslegers in seinem eingefalteten Zustand aufweist. Eine weitere Verbesserung in dieser Hinsicht wird erzielt, wenn die Krümmung des Grundauslegers so ausgebildet ist, daß die an den beiden Enden des zweiten Auslegers befindlichen Drehgelenke bei eingefaltetem Knickmast tiefer als das Drehgelenk des Grundauslegers am Drehlagerbock liegen. In diesem Falle können sowohl der Grundausleger als auch der zweite Ausleger bei minimaler Bauhöhe kröpfungsfrei ausgebildet werden. Dadurch wird erreicht, daß in den Gelenken keine Torsionsbeanspruchungen durch das Eigengewicht der Ausleger auftreten, deren Schwingungen bei dynamischer Beanspruchung durch die in der Ebene der Knickausleger angeordneten Zylinder nicht ohne weiteres gedämpft werden könnten.

Aus Platzgründen kann der Endausleger gegenüber dem dritten Ausleger seitlich abgekröpft werden, so daß das Werkzeug bei zusammengefaltetem Knickmast in der Nähe des Drehgelenks des Grundauslegers am Drehlagerbock etwa auf dessen Höhe abgestützt werden kann. An dieser Stelle ist die Kröpfung tolerabel, weil dort die auftretenden Torsionsmomente aufgrund der kleinen Eigengewichte gering sind. Außerdem kann der Endausleger relativ kurz und kastenförmig ausgebildet werden, so daß Torsionsschwingungen weitgehend durch eine steife Konstruktion abgefangen werden können.

Aus Symmetriegründen kann es von Vorteil sein, wenn neben dem Endausleger auch der dritte Ausleger gekröpft ist, und zwar so, daß die Kröpfung des vierten Auslegers teilweise kompensiert wird, so daß das Multigelenk in Richtung Symmetrieachse des Knickmasts wandert. Eine weitere Kompensation in dieser Hinsicht kann dadurch erzielt werden, daß das Multigelenk drei hintereinander angeordnete, abwechselnd zueinander senkrechte Achsen aufweisende, motorisch angetriebene Dreheinheiten und eine mit der letzten Dreheinheit verbundene, mit deren Drehachse fluchtende, motorisch angetriebene, im zusammengeklappten Zustand parallel zum Endausleger ausgerichtete Lineareinheit aufweist. Damit ist es möglich, daß das Multigelenk um seine Eigenachse in Richtung Symmetrieachse unter Kompensation der Kröpfung geschwenkt wird.

Um mit dem Grundausleger einen ausreichenden Schwenkbereich überstreichen zu können, sind der Grundausleger und dessen als Hydrozylinder ausgebildetes Antriebsaggregat zweckmäßig über eine Wattsche Gelenkkette mit dem Drehlagerbock gekoppelt. Die Gelenkkette weist hierzu zweckmäßig eine oberhalb des Drehgelenks am Grundausleger sowie an der Kolbenstange des Hydrozylinders angelenkte Koppelscheibe und eine mit ihren Enden unterhalb des Drehgelenks am Drehlagerbock sowie an der Koppelscheibe angelenkte, entgegengesetzt zum Grundausleger gekrümmte Druckstange auf. Mit diesen Maßnahmen wird trotz der räumlich beengten Verhältnisse im Bereich des Drehlagerbocks ein Schwenkwinkel des Grundauslegers von 180° erzielt.

Um im Überkopfbetrieb einen möglichst großen Arbeitsbereich von der unmittelbaren Nähe des Geräteträgers bis zur vollständigen Streckung des Knickmasts mit geringstmöglichem Energieaufwand und Eigengewicht des Knickmasts und hohe Beweglichkeit ohne Konfigurationswechsel im Verlauf eines Bewegungsvorgangs gewährleisten zu können, wird gemäß der Erfindung vorgeschlagen, daß die Schwenkwinkel zwischen dem Grundausleger und dem zweiten Ausleger etwa 180° und zwischen dem zweiten und dritten Ausleger 270° betragen, während der Schwenkwinkel zwischen dem dritten Ausleger und dem Endausleger 180° bis 270° betragen sollte.

Zur Kompensation eines beim Anfahrvorgang etwa aufgrund von Hindernissen nicht fahrbaren Kurswinkels kann das Fahrgestell mit einem kombinierten Hub- und Schwenkmechanismus ausgerüstet werden, der einen zentralen Drehteller und zwei konzentrisch zum Drehteller ausrichtbare, im Winkelabstand voneinander angeordnete Antriebsrollen aufweist, die gemeinsam unter Abheben des Fahrgestells auf den Boden absenkbar sind. Das vom Boden abgehobene Fahrgestell kann sodann um die Achse des Drehtellers mit Hilfe der Antriebsrollen in die vorgeschriebene Richtung zum Großobjekt ausgerichtet werden.

Grundsätzlich kann diese Ausrichtung jedoch auch softwaremäßig durch Nachführen der schwenkbar installierten Entfernungsbildkamera und/oder des Knickmasts um seine Hochachse durchgeführt werden.

Im folgenden wird die Erfindung anhand einiger in der Zeichnung in schematischer Weise dargestellter Ausführungsbeispiele näher erläutert. Es zeigen
- Fig. 1a und b: eine Seitenansicht und eine Draufsicht eines auf einem Fahrgestell angeordneten Großmanipulators mit Waschbürste;
- Fig. 1c: eine Draufsicht entsprechend Fig. 1b für ein abgewandeltes Ausführungsbeispiel eines Großmanipulators mit abgekröpftem dritten Ausleger;

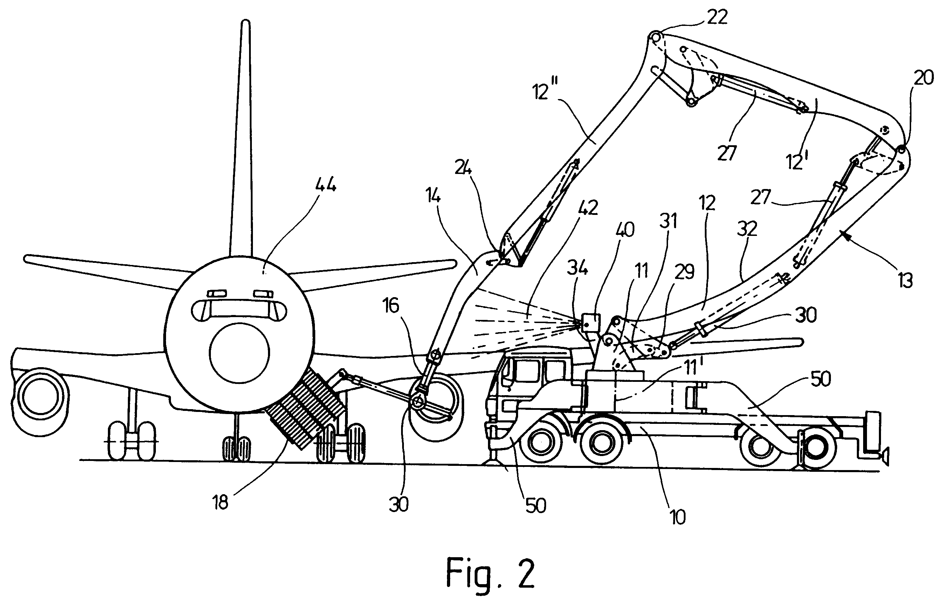

- Fig. 2: eine Seitenansicht des Großmanipulators nach Fig. 1a und b beim Waschen eines Flugzeugs;
- Fig. 3a und b: ein gegenüber Fig. 1a und b abgewandeltes Ausführungsbeispiel eines Großmanipulators mit Hub- und Schwenkmechanismus.

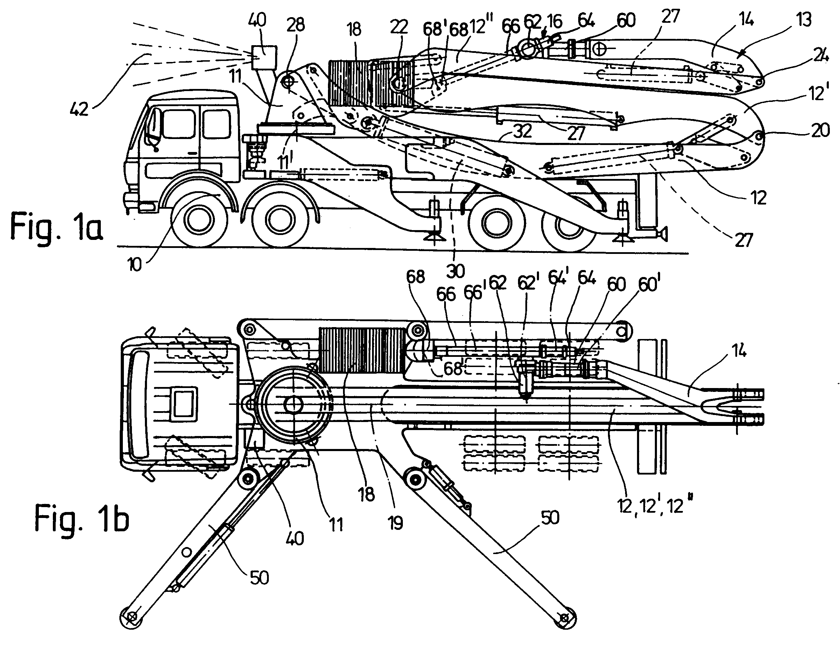

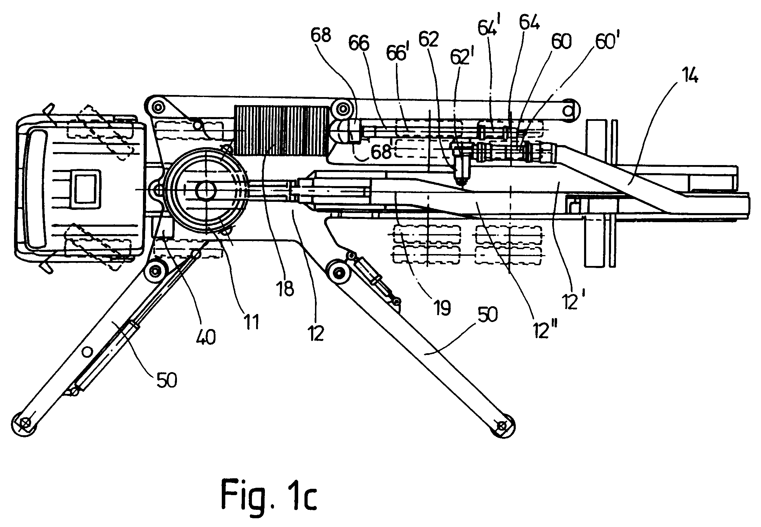

Der in der Zeichnung dargestellte mobile Großmanipulator besteht im wesentlichen aus einem auf einem Drehlagerbock 11 eines motorgetriebenen Fahrgestells 10 mit seinem Grundausleger 12 um eine vertikale Achse 11' drehbar gelagerten Knickmast 13, einem am Endausleger 14 des Knickmasts 13 angeordneten Multigelenk 16 und einem am freien Ende des Multigelenks lösbar befestigten Bürstenkopf 18. Die vier Ausleger 12,12',12'' und 14 des Knickmasts 13 sind an ihren einander zugewandten Enden an Gelenken 20,22,24 um horizontale Achsen begrenzt verschwenkbar miteinander verbunden. Das Verschwenken erfolgt mittels Hydrozylindern 27, die an geeigneten Stellen zwischen den Auslegern angeordnet sind. Der Grundausleger 12 ist an einem horizontalen Lager 28 mittels eines Hydrozylinders 30 und einer Wattschen Gelenkkette, bestehend aus einer Koppelplatte 29 und einer bananenartig gebogenen Druckstange 31 um 180° schwenkbar am Drehlagerbock 11 gelagert. Im zusammengefalteten Zustand befindet sich der Grundausleger 12 unter den übrigen Auslegern 12',12'',14, während der Endausleger 14 mit zum Drehlagerbock 11 weisendem Multigelenk 16 und Bürstenkopf 18 sich über den anderen Auslegern 12,12',12'' befindet. Der Grundausleger 12 ist in seiner Längserstreckung so in sich gekrümmt, daß im zusammengefalteten Zustand sein nach oben weisender Rand 32 eine konkave Mulde zur Aufnahme des eingefalteten zweiten Auslegers 12' bildet. Der Grundausleger 12 und der zweite Ausleger 12' sind ungekröpft, während der Endausleger 14 eine seitliche Kröpfung 33 aufweist, die es ermöglicht, das Multigelenk 16 und den Bürstenkopf 18 im zusammengefalteten Zustand neben den Auslegern 12,12',12'' zu plazieren. Der dritte Ausleger 12'' ist im Falle der Fig. 1b ungekröpft, während er bei dem Ausführungsbeispiel nach Fig. 1c nach der dem Endausleger 14 gegenüberliegenden Seite gekröpft ist. Durch die Kröpfung des dritten Auslegers wird die Kröpfung des vierten Auslegers insofern teilweise kompensiert, als dadurch das Multigelenk 16 mit dem angekoppelten Bürstenkopf 18 in Richtung Symmetrieachse 19 des Knickmasts wandert.

Diese Anordnung ermöglicht es, mit dem Bürstenkopf 18 beliebige Oberflächenkonturen innerhalb der von den Auslegern 12,12',12'',14 aufgespannten Ebene abzufahren. Mit Hilfe des motorisch verstellbaren Multigelenks 16 ist es zudem möglich, den Bürstenkopf 18 um mehrere Dreh- und Schubachsen gegenüber dem Endausleger 14 zu bewegen. Wie aus Fig. 1b und 1c zu ersehen ist, besteht das Multigelenk 16 zu diesem Zweck im wesentlichen aus drei Dreheinheiten 60,62,64 mit zueinander senkrechten Achsen 60',62',64' und einer mit der letzten Dreheinheit 64 verbundenen teleskopartigen Lineareinheit 66, deren Teleskopachse 66' mit der Drehachse 64' fluchtet. Der Bürstenkopf 18 ist über eine weitere Dreheinheit 68 mit zur Teleskopachse 66' senkrechter Orientierungsachse 68' an das Multigelenk 16 angekoppelt. Auf diese Weise ergibt sich zwischen der Achse 60' der Dreheinheit 60 und den Achsen 64' und 66' der Dreheinheit 64 und der Lineareinheit 66 ein Achsversatz, der zu einer kurzen Bauweise führt und durch Drehen um die Achse 60' eine zusätzliche Kompensation der Kröpfung des Endauslegers 14 in Richtung Symmetrieachse 19 ermöglicht. Eine solche Kompensation ist insofern von Bedeutung, als dadurch beim Programmieren der Waschbahnen die Symmetrieeigenschaften des Flugzeugs und des Großroboters ausgenutzt werden können.

Der Drehlagerbock 11 weist auf seiner dem Knickmast im zusammengefalteten Zustand gegenüberliegenden Seite eine Konsole 34 zur Aufnahme einer optoelektronischen Entfernungsbildkamera 40 auf. Bei der Entfernungsbildkamera handelt es sich um einen 3D-Laserscanner, der einen dreidimensionalen Raum innerhalb des Blickfensters 42 erfaßt und bezüglich der Entfernung von einem Meßobjekt 44 digitalisiert. Die Entfernungsbildkamera 40 ist auf der Konsole 34 in ausreichender Höhe über dem Fahrgestell 10 angeordnet, um vom Blickfenster 42 signifikante Stellen des Meßobjekts 44 einmessen zu können. Die Entfernungsbildkamera 40 arbeitet mit einem Laserstrahl, der mit einer bestimmten Taktfrequenz über den Öffnungswinkel des Blickfensters 42 durchgefahren wird. Die Auswertung der Entfernungssignale, die sich aus einer Zeitdifferenzmessung ergeben, läßt erkennen, ob und in welcher Entfernung eine reflektierende Fläche vorhanden ist.

Um den Großmanipulator in eine Waschposition vor dem Flugzeug 44 zu bringen, muß dieser im Zuge des Anfahrvorganges definiert abgestellt werden, damit alle bei einem Waschprogramm zu durchfahrenden Oberflächenstellen in der Reichweite und im Schwenkbereich des Knickmasts 13 mit der Waschbürste 18 liegen. Die über die Entfernungsbildkamera 40 erzeugten Bilddaten werden in einer Auswerteschaltung und einem Bordrechner ausgewertet. In einem Speichermedium des Bordrechners sind für jeden zu bearbeitenden Flugzeugtyp signifikante Ausschnitte des Flugzeugs 44 bezogen auf das Blickfenster 42 der Entfernungsbildkamera 40 als Referenzbilder abgespeichert. Als Anfahrhilfe wird von der Entfernungsbildkamera laufend ein Entfernungsbild des betreffenden Flugzeugausschnitts erzeugt und mit dem abgespeicherten Referenzbild verglichen. Daraus lassen sich Richtungs- und Positionsdaten ableiten, die dem Fahrer Anweisungen für die Fahrtrichtung und die Entfernung geben. Ziel der Anfahrhilfe ist es, den Großmanipulator auf einem vorgegebenen Abstellfeld in Reichweite des Flugzeugs 44 zu positionieren. Nach Erreichen des Abstellfelds wird das Fahrgestell 10 durch Ausschwenken und Absenken der Stützbeine 50 auf dem Untergrund abgestützt und dadurch relativ zum Flugzeug positioniert.

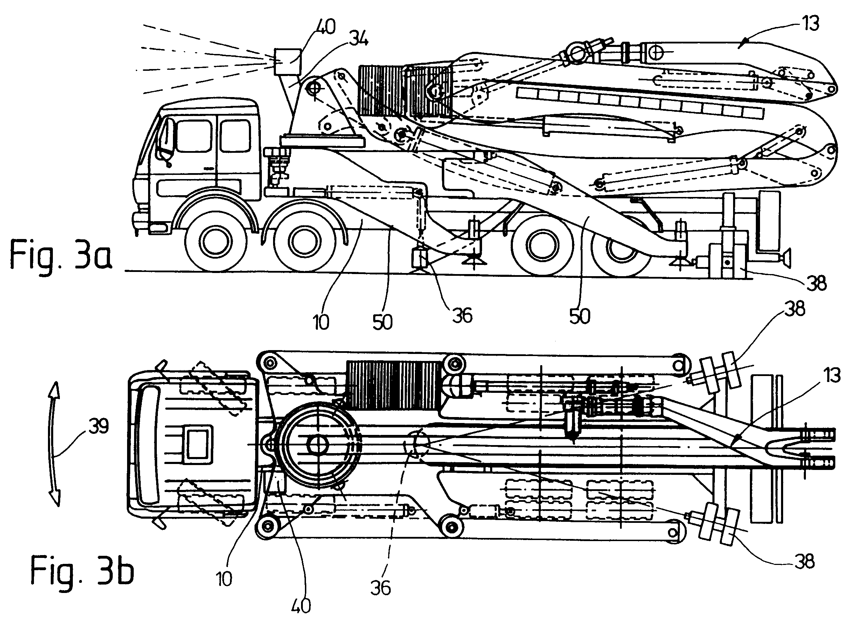

Bei dem in Fig. 3a und b gezeigten abgewandelten Ausführungsbeispiel ist am Fahrgestell 10 zusätzlich ein Hub- und Schwenkmechanismus vorgesehen, der einen zentralen Drehteller 36 und zwei konzentrisch zum Drehteller 36 ausrichtbare, einen Winkelabstand voneinander aufweisende Antriebsräder aufweist. Mit diesem Mechanismus ist es möglich, das Fahrgestell 10 durch Absenken des Drehtellers 36 und der Antriebsräder 38 vom Untergrund abzuheben und um die durch den Drehteller definierte Hochachse mit Hilfe der Antriebsräder in die gewünschte Drehlage in Richtung des Doppelpfeils 39 bezüglich des Flugzeugs 44 zu verschwenken.

Sodann kann die Einmessung des Großmanipulators relativ zum Flugzeug 44 durchgeführt werden. Dies erfolgt ebenfalls mit Hilfe der Entfernungsbildkamera 40 durch Vergleich mit einem abgespeicherten Referenzmuster. Nach erfolgter Einmessung werden die physikalischen Werte der Neigungsgeber an der Entfernungsbildkamera 40 meßtechnisch erfaßt und durch ein Initialisierungsprogramm auf Null gesetzt. Bei einer Bewegung des Knickmasts 13 wird dann der Relativwinkel aufgrund der Neigung der Standfläche im Bewegungsprogramm berücksichtigt.

Wenn diese Vorbereitungen getroffen sind und das zum eingemessenen Standort gehörende Waschprogramm ausgewählt ist, kann der eigentliche Waschvorgang beginnen. Hierzu wird der Knickmast 13 entfaltet. Durch sukzessiven Abruf der Gelenkkoordinaten aus einer Arbeitsdatei erhält man Sollwerte, die durch die Waschbürste angefahren werden, wobei der Ist- und Sollwertvergleich an jedem einzelnen Gelenk durch zugeordnete Koordinatengeber erfolgt. Wegen Deformationen des Flugzeugs und des Unterbaus, Ungenauigkeiten des Verfahrens und dynamischen Fehlern des Geräts muß eine Feinkompensation durchgeführt werden. Dies ist nur durch eine zusätzliche Sensorik zu erreichen, die die genannten Fehler durch Messung des Anpreßdrucks und durch Zustellung der Hilfsachsen des Multigelenks 16 kompensiert. Bei den Hilfsachsen handelt es sich um eine Teleskopachse, die Positionsfehler und um eine Schwenkachse, die Orientierungsfehler des Bürstenkopfes 18 ausgleicht.

Da die Entfernungsbildkamera 40 bei dem gewählten Überkopfbetrieb immer in Arbeitsrichtung ausgerichtet ist, kann sie während des Ablaufs des Waschprogramms mitlaufen und zur Kollisionsüberwachung eingesetzt werden. Die Entfernungsbildkamera 40 kann hierbei einzelne Gelenke, das Flugzeug 44 oder sonstige Objekte im Arbeitsraum vermessen und hinsichtlich Kollisionen kontrollieren. Diese Betriebsweise könnte wichtig sein, wenn beispielsweise ein Meßwertaufnehmer an einem der Gelenke ausfällt und falsche Meßwerte liefert, die vom Bediener und vom Rechner nicht erkannt werden.

Zusammenfassend ist folgendes festzustellen: Die Erfindung bezieht sich auf eine Anordnung zur Oberflächenreinigung von Flugzeugen mit einem Großmanipulator, der einen aus mehreren an Drehgelenken 20,22,24,28 mittels hydraulischer Antriebsaggregate 30 gegeneinander verschwenkbaren Auslegern 12,12',12'',14 bestehenden, auf einem Drehlagerbock 11 eines motorgetriebenen Fahrgestells 10 mit seinem Grundausleger 12 um eine Hochachse 11' drehbar gelagerten Knickmast und einen am freien Ende eines am Endausleger 14 angeordneten Multigelenks 16 angeordneten rotierenden Bürstenkopf 18 aufweist. Um eine Anfahrhilfe für das Fahrgestell 10, eine Einmessung des Großmanipulators relativ zu dem Flugzeug und/oder eine Überwachung des Waschvorgangs zu ermöglichen, ist am Drehlagerbock 11 des Knickmasts eine gegen das zu bearbeitende Flugzeug 44 ausrichtbare optoelektronische Entfernungsbildkamera 40 und eine mit den Ausgangssignalen der Entfernungsbildkamera 40 beaufschlagte rechnergestützte Auswerteelektronik vorgesehen.

## Patentansprüche

1. Anordnung zur Oberflächenbearbeitung, insbesondere zur Oberflächenreinigung von Großobjekten, wie Flugzeugen (44), Schiffen oder Bauwerken, mit einem Großmanipulator, der einen aus mehreren, an Drehgelenken (20,22,24,28) mittels hydraulischer oder motorischer Antriebsaggregate (27,30) gegeneinander verschwenkbaren Auslegern (12,12',12'',14) bestehenden, auf einem Drehlagerbock (11) eines vorzugsweise als motorgetriebenes Fahrgestell (10) ausgebildeten Geräteträgers mit seinem Grundausleger (12) um eine Hochachse (11') drehbar gelagerten Knickmast (13) und ein am Endausleger (14) des Knickmasts (13) oder am freien Ende eines am Endausleger (14) angeordneten Multigelenks (16) angeordnetes, vorzugsweise als rotierender Bürstenkopf (18) ausgebildetes Werkzeug aufweist, wobei der Grundausleger (12) im zusammengefalteten Zustand des Knickmasts (13) unter den anderen Auslegern (12', 12'',14) auf dem Geräteträger (10) abgestützt ist, und der Endausleger (14) mit in Richtung Drehlagerbock (11) weisendem Multigelenk (16) und Werkzeug (18) über oder neben den anderen Auslegern (12,12', 12'') angeordnet ist, **dadurch gekennzeichnet**, daß an einer auf der dem Knickmast (13) im zusammengefalteten und auf dem Geräteträger abgestützten Zustand gegenüberliegenden Seite des Drehlagerbocks (11) angeordneten und um dessen Hochachse (11') zusammen mit dem Knickmast drehbaren Konsole (34) eine gegen das zu bearbeitende Großobjekt ausrichtbare optoelektronische Entfernungsbildkamera angeordnet ist, und daß eine mit den Ausgangssignalen der Entfernungsbildkamera (40) beaufschlagte, rechnergestützte Auswerteelektronik als Anfahrhilfe für das Fahrgestell (10) und/oder zur Einmessung des Großmanipulators relativ zu dem zu bearbeitenden Großobjekt (44) und/oder zur Überwachung des Bearbeitungsvorgangs vorgesehen ist.

2. Anordnung nach Anspruch 1, **dadurch gekennzeichnet**, daß die Entfernungsbildkamera (40) in der Nähe des Drehlagerbocks (11) starr oder beweglich, insbesondere um eine Hochachse schwenkbar und/oder um eine Horizontalachse neigbar am Großmanipulator angeordnet ist.

3. Anordnung nach einem der Ansprüche 1 oder 2, **dadurch gekennzeichnet**, daß der Grundausleger (12) um eine horizontale Achse (28) mit einem Schwenkwinkel von etwa 180° schwenkbar am Drehlagerbock (11) gelagert ist.

4. Anordnung nach einem der Ansprüche 1 bis 3, **dadurch gekennzeichnet**, daß der Grundausleger (12) eine in seinem auf den Geräteträger (10) abgelegten Zustand nach oben weisende konkave Krümmung (32) zur Aufnahme des am Grundausleger (12) angelenkten zweiten Auslegers (12') in seinem eingefalteten Zustand aufweist.

5. Anordnung nach Anspruch 4, **dadurch gekennzeichnet**, daß die an den beiden Enden des zweiten Auslegers (12') befindlichen Drehgelenke (20,22) bei eingefaltetem Knickmast (13) tiefer als das Drehgelenk (28) des Grundauslegers (12) am Drehlagerbock (11) liegen.

6. Anordnung nach einem der Ansprüche 1 bis 5, **dadurch gekennzeichnet**, daß der Grundausleger (12) und der zweite Ausleger (12') kröpfungsfrei ausgebildet sind.

7. Anordnung nach Anspruch 6, **dadurch gekennzeichnet**, daß der Endausleger (14) gegenüber dem dritten Ausleger (12'') seitlich abgekröpft ist, und daß das Werkzeug (18) bei zusammengefaltetem Knickmast (13) in der Nähe des Drehgelenks (28) des Grundauslegers (12) am Drehlagerbock (11) auf dessen Höhe abgestützt ist.

8. Anordnung nach Anspruch 6 oder 7, **dadurch gekennzeichnet**, daß der dritte Ausleger gegenüber dem zweiten Ausleger nach der dem Endausleger gegenüberliegenden Seite seitlich abgekröpft ist.

9. Anordnung nach einem der Ansprüche 1 bis 8**, dadurch gekennzeichnet**, daß das Multigelenk (16) drei hintereinander angeordnete, abwechselnd zueinander senkrechte Achsen (60',62',64') aufweisende, motorisch angetriebene Dreheinheiten (60,62,64) und eine mit der letzten Dreheinheit (64) verbundene, mit deren Drehachse (64') fluchtende, motorisch angetriebene, im zusammengefalteten Zustand des Knickmasts (13) parallel zum Endausleger (14) ausgerichtete teleskopartige Lineareinheit (66) aufweist, wobei das Werkzeug (18) über eine weitere Dreheinheit (68) mit zur Teleskopachse (66') senkrechter Orientierungsachse (68') an das Multigelenk (16) angekoppelt ist und wobei die Achsen (60',66') der endauslegerseitigen Dreheinheit (60) und der Lineareinheit (66) in seitlich gegeneinander versetzten, zueinander parallelen Ebenen angeordnet sind.

10. Anordnung nach einem der Ansprüche 1 bis 9, **dadurch gekennzeichnet**, daß der Grundausleger (12) und dessen als Hydrozylinder (30) ausgebildetes Antriebsaggregat über eine Wattsche Gelenkkette (29,31) mit dem Drehlagerbock (11) gekoppelt sind.

11. Anordnung nach Anspruch 10, **dadurch gekennzeichnet**, daß die Wattsche Gelenkkette eine oberhalb des Drehgelenks (28) am Grundausleger sowie an der Kolbenstange des Hydrozylinders (28) angelenkte Koppelscheibe (29) und eine mit ihren Enden unterhalb des Drehgelenks (28) am Drehlagerbock (11) sowie an der Koppelscheibe (29) angelenkte, entgegengesetzt zum Grundausleger (12) gekrümmte Druckstange (31) aufweist.

12. Anordnung nach einem der Ansprüche 1 bis 11, **dadurch gekennzeichnet**, daß die Schwenkwinkel zwischen dem Grundausleger (12) und dem zweiten Ausleger (12') etwa 180° und zwischen dem zweiten und dritten Ausleger etwa 270° betragen.

13. Anordnung nach Anspruch 12, **dadurch gekennzeichnet**, daß der Schwenkwinkel zwischen dem dritten Ausleger (12'') und dem Endausleger (14) 180° bis 270° beträgt.

14. Anordnung nach einem der Ansprüche 1 bis 13**, dadurch gekennzeichnet**, daß der als Fahrgestell (10) ausgebildete Gerateträger einen kombinierten Hub- und Schwenkmechanismus mit einem zentralen Drehteller (36) und zwei konzentrisch zum Drehteller ausrichtbaren, im Winkelabstand voneinander angeordneten Antriebsrädern (38) aufweist, die gemeinsam unter Abheben des Fahrgestells (10) auf den Untergrund absenkbar sind.

## Claims

1. An arrangement for the surface treatment, in particular for the surface cleaning of large objects, like aircrafts (44), ships or buildings, comprising a large manipulator, which has an articulated mast (13), which consists of several arms (12, 12', 12'', 14), which are pivotal with respect to one another on pivot joints (20, 22, 24, 28) by means of hydraulic or motoric driving mechanisms (27, 30), and which is rotatably supported with its base arm (12) about a vertical axis (11') on a pivot-bearing block (11) of an apparatus carrier preferably designed as a motor-driven undercarriage (10), and has a tool arranged on the last arm (14) of the articulated mast (13) or on the free end of a multiple joint (16) arranged on the last arm (14), and is preferably designed as a rotating brush head (18), whereby the base arm (12) in the collapsed state of the articulated arm (13) is supported under the other arms (12', 12'', 14) on the apparatus carrier (10), and the last arm (14) is arranged with the multiple joint (16) pointing in direction of the pivot-bearing block (11) and the tool (18) above or next to the other arms (12, 12', 12''), characterized in that an opto-electronic distance camera, which can be aligned with respect to the large object to be treated, is arranged on a console (34), which side is opposite the articulated mast (13) in the collapsed state supported on the apparatus carrier, and is rotatable about its vertical axis (11') together with the articulated mast, and that calculator-supported evaluating electronics loaded with the output signals of the distance camera (40) is provided as a start-up aid for the undercarriage (10) and/or for locating the large manipulator relative to the large object (44) to be treated and/or for monitoring the treatment operation.

2. The arrangement according to Claim 1, characterized in that the distance camera (40) is arranged on the large manipulator near the pivot-bearing block (11) rigidly or movably, in particular pivotally about a vertical axis, and/or inclinable about a horizontal axis.

3. The arrangement according to one of the Claims 1 or 2, characterized in that the base arm (12) is supported pivotally with a pivot angle of approximately 180° about a horizontal axis (28) on the pivot-bearing block (11).

4. The arrangement according to one of the Claims 1 to 3, characterized in that the base arm (12) has a concave curvature (32), which opens upwardly in its state remote from the apparatus carrier (10), for receiving the second arm (12') hinged to the base arm (12) in its collapsed state.

5. The arrangement according to Claim 4, characterized in that the pivot joints (20, 22) provided at both ends of the second arm (12') lie lower than the pivot joint (28) of the base arm (12) on the pivot-bearing block (11) with the articulated mast (13) collapsed.

6. The arrangement according to one of the Claims 1 to 5, characterized in that the base arm (12) and the second arm (12') are designed bend-free.

7. The arrangement according to Claim 6, characterized in that the last arm (14) is laterally bent with respect to the third arm (12''), and that the tool (18) is supported near the pivot joint (28) of the base arm (12) on the pivot-bearing block (11) at its level with the articulated mast (13) being collapsed.

8. The arrangement according to Claim 6 or 7, characterized in that the third arm is laterally bent with respect to the second arm toward the side opposite the last arm.

9. The arrangement according to one of the Claims 1 to 8, characterized in that the multiple joint (16) has three pivot points (60, 62, 64) driven by a motor and having three axes (60', 62', 64') arranged one behind the other and being alternately perpendicular to one another, and has a telescopible linear part (66) connected to the last pivot point (64), is aligned with its pivot axis (64'), is driven by a motor, and is aligned in the collapsed state of the articulated mast (13) parallel with respect to the last arm (14), whereby the tool (18) is coupled through a further pivot point (68) with an orientation axis (68') perpendicular with respect to the telescopic axis (66') to the multiple joint (16), and whereby the axes (60', 66') of the pivot point (60) on the side of the last arm and of the linear part (66) are arranged in planes, which are laterally offset with respect to one another and are parallel to one another.

10. The arrangement according to one of the Claims 1 to 9, characterized in that the base arm (12) and its driving mechanism, designed as a hydraulic cylinder (30), are coupled with the pivot-bearing block (11) through a Watt's link chain (29, 31).

11. The arrangement according to Claim 10, characterized in that the Watt's link chain has a coupling plate (29) hinged above the pivot joint (28) to the base arm and to the piston rod of the hydraulic cylinder (28), and a connecting rod (31) hinged with its ends below the pivot joint (28) to the pivot-bearing block (11) and to the coupling plate (29), and is curved oppositely to the base arm (12).

12. The arrangement according to one of the Claims 1 to 11, characterized in that the pivot angle between the base arm (12) and the second arm (12') is approximately 180° and between the second and third arm approximately 270°.

13. The arrangement according to Claim 12, characterized in that the pivot angle between the third arm (12'') and the last arm (14) is 180° to 270°.

14. The arrangement according to one of the Claims 1 to 13, characterized in that the apparatus carrier designed as the undercarriage (10) has a combined lifting and pivoting mechanism with a center turning plate (36) and two driving wheels (38) concentrically alignable with respect to the turning plate and arranged at an angular distance from one another, which driving gears can be lowered together onto the ground while lifting off the undercarriage (10).

## Revendications

1. Système de traitement de surfaces, notamment de nettoyage de surfaces d'objets de grandes dimensions tels que des avions (44), des bateaux ou des bâtiments, au moyen d'un manipulateur de grande capacité, comprenant un mât articulé (13) composé de plusieurs cantilevers (12, 12', 12'', 14) pouvant être pivotés les uns par rapport aux autres sur des articulations tournantes (20, 22, 24, 28) au moyen de groupes d'entraînement hydrauliques ou motorisés (27, 30), monté sur un support tournant (11) d'un support d'appareil conformé de préférence en châssis motorisé (10), et dont le cantilever de base (12) peut être tourné autour d'un axe vertical (11'), et un outil réalisé de préférence sous la forme d'une tête porte-brosse tournante (18), monté sur le cantilever d'extrémité (14) du mât articulé (13) ou sur l'extrémité libre d'une articulation multiple (16) fixée sur le cantilever d'extrémité (14), le cantilever de base (12) s'appuyant, à l'état replié du mât articulé (13), sur le support d'appareil (10), sous les autres cantilevers (12', 12'', 14), et le cantilever d'extrémité (14) avec l'articulation multiple (16) et l'outil (18) dirigés vers le support tournant (11), étant disposé au-dessus ou à côté des autres cantilevers (12, 12', 12''), **caractérisé en** ce que sur une console (34) disposée sur le côté du support tournant (11) opposé au mât articulé (13), à l'état de repliage et d'appui de celui-ci sur le support d'appareil, et pouvant pivoter, conjointement avec le mât articulé, autour de l'axe vertical (11') dudit support, est installée une caméra d'imagerie à distance optoélectronique pouvant être dirigée vers l'objet à traiter de grandes dimensions, et qu'une électronique d'interprétation assistée par ordinateur et recevant les signaux de sortie de la caméra d'imagerie à distance (40) est prévue comme aide au positionnement pour le châssis (10) et/ou pour l'étalonnage du manipulateur de grande capacité par rapport à l'objet à traiter de grandes dimensions (44) et/ou pour la surveillance du processus de traitement.

2. Système selon la revendication 1, caractérisé en ce que la caméra d'imagerie à distance (40) est installée sur le manipulateur de grande capacité, à proximité du support tournant (11), de manière rigide ou mobile, en particulier de façon à pouvoir tourner autour d'un axe vertical et/ou être inclinée autour d'un axe horizontal.

3. Système selon la revendication 1 ou 2, caractérisé en ce que le cantilever de base (12) est monté sur le support tournant (11) de manière à pouvoir pivoter d'un angle de pivotement d'environ 180° autour d'un axe horizontal (28).

4. Système selon l'une des revendications 1 à 3, caractérisé en ce que le cantilever de base (12) présente, à l'état déposé sur le support d'appareil (10), une courbure concave (32) dirigée vers le haut et destinée à recevoir le second cantilever (12') articulé sur le cantilever de base (12), à l'état replié dudit second cantilever.

5. Système selon la revendication 4, caractérisé en ce que les articulations tournantes (20, 22) situées aux deux extrémités du second cantilever (12')sont disposées, à l'état replié du mât articulé (13), à un niveau plus bas que l'articulation tournante (28) du cantilever de base (12) sur le support tournant (11).

6. Système selon l'une des revendications 1 à 5, caractérisé en ce que le cantilever de base (12) et le second cantilever (12') sont dépourvus de coudes.

7. Système selon la revendication 6, caractérisé en ce que le cantilever d'extrémité (14) est coudé latéralement par rapport au troisième cantilever (12''), et que, à l'état replié du mât articulé (13), l'outil (18) prend appui, à proximité de l'articulation tournante (28) du cantilever de base (12), sur le support tournant (11), à la hauteur de celui-ci.

8. Système selon la revendication 6 ou 7, caractérisé en ce que le troisième cantilever est coudé latéralement par rapport au second cantilever vers le côté situé en face du cantilever d'extrémité.

9. Système selon l'une des revendications 1 à 8, caractérisé en ce que l'articulation multiple (16) comprend trois unités de rotation (60, 62, 64) motorisées disposées les unes derrière les autres et présentant alternativement des axes perpendiculaires (60', 62', 64'), et une unité linéaire (66) télescopique motorisée couplée avec la dernière unité de rotation (64) et alignée avec l'axe de rotation (64') de celle-ci, qui, à l'état replié du mât articulé (13), est orientée parallèlement au cantilever d'extrémité (14), l'outil (18) étant couplé avec l'articulation multiple (16) par l'intermédiaire d'une unité de rotation supplémentaire (68) dont l'axe d'orientation (68') est perpendiculaire à l'axe télescopique (66'), et les axes (60', 66') de l'unité de rotation (60) située du côté du cantilever d'extrémité et de l'unité linéaire (66) étant disposés dans des plans parallèles décalés latéralement l'un par rapport à l'autre.

10. Système selon l'une des revendications 1 à 9, caractérisé en ce que le cantilever de base (12) et son groupe d'entraînement conformé en cylindre hydraulique (30) sont couplés avec le support tournant (11) par l'intermédiaire d'une chaîne à articulations de Watt (29, 31).

11. Système selon la revendication 10, caractérisé en ce que la chaîne à articulations de Watt comprend un disque de couplage (29) articulé au-dessus du support tournant (28) sur le cantilever de base ainsi que sur la tige de piston du cylindre hydraulique (28), et une barre de compression (31) cintrée dans le sens opposé au cantilever de base (12), dont les extrémités sont articulées, au-dessous de l'articulation tournante (28), sur le support tournant (11) ainsi que sur le disque de couplage (29).

12. Système selon l'une des revendications 1 à 11, caractérisé en ce que les angles de pivotement sont d'environ 180° entre le cantilever de base (12) et le second cantilever (12') et d'environ 270° entre les second et troisième cantilevers.

13. Système selon la revendication 12, caractérisé en ce que l'angle de pivotement entre le troisième cantilever (12'') et le cantilever d'extrémité (14) est compris entre 180° et 270°.

14. Système selon l'une des revendications 1 à 13, caractérisé en ce que le support d'appareil conformé en châssis (10) comprend un mécanisme de levage et de pivotement combiné avec un plateau tournant central (36) et deux roues d'entraînement (38) disposées à distance angulaire l'une de l'autre qui peuvent être orientées coaxialement par rapport au plateau tournant et abaissées ensemble sur le sol en soulevant le châssis (10).
